# EUROPEAN PATENT APPLICATION

(11) **EP 2 818 773 A1**
(43) Date of publication of application: **31.12.2014**
(21) Application number: 14166152.0
(22) Date of filing: 28.04.2014
(51) Int. Cl.: F16J 15/34, F17C 13/06, F17C 1/00, F16J 15/04

(54) **Threaded interfaces**

(30) Priority: 26.04.2013 US 201313871778
(71) Applicant: Kidde Technologies, Inc., Wilson, NC 27896 (US)
(72) Inventor: Porterfield, John W, Raleigh, NC North Carolina 27616-8882 (US); Maclachlan, Daniel R, Wilson, NC North Carolina 27893-2220 (US)
(74) Representative: Hall, Matthew Benjamin

(57) **Abstract**

A threaded interface includes a male threaded body (16) and a female threaded body (18). The male threaded body includes a threaded section (38) with external threads and a seal section (36) with a plurality of o-rings (42) seated circumferentially around the threaded body. The female threaded body includes a threaded section (32) with internal threads and a seal section (28). The seal section of the female threaded body sealingly engages the o-rings of the seal section of the male threaded body. A pressure vessel (10) and a pressure vessel assembly for an automatic fire extinguishing system incorporating the threaded interface are also disclosed.

## Description

### BACKGROUND OF THE INVENTION

### Field of the Invention

The present invention generally relates to threaded interfaces, and more particularly to cylinder to valve threaded interfaces for pressure vessels and high rate discharge valves used in fire extinguishers.

### Description of Related Art

Automatic Fire Extinguishing Systems (AFES) are safety systems installed in vehicles to extinguish fire or explosion events that may arise during vehicle operation. They typically are activated by a system controller after a vehicle device such as a high speed infra-red (IR) or ultra violet (UV) sensor detects a fire event. Due to the automatic nature of the system and the fact that system triggered events are relatively rare, an AFES spends a large percentage of its time in an idle but ready state. In order to function properly an AFES must maintain a charge of fire suppression agent at sufficient pressure to mitigate the effect of the vehicle event. Ideally, an AFES maintains sufficient pressure over the life of the vehicle.

Several factors can cause extinguisher pressure to drop in conventional AFES and cause the AFES to malfunction in response to a vehicle fire or explosion event. First, conventional extinguishers tend to have some baseline level of charge leakage over time. While this has not historically been a problem, vehicle life cycles are becoming longer, so baseline levels of leaks that were tolerable on shorter lived vehicles can adversely affect the reliability of AFES systems on longer lived vehicles which can have life cycles extending beyond thirty years. Second, vehicles are being increasingly exposed to extreme temperature environments where conventional AFES extinguishers leak at higher rates than baseline level. This is because the metal parts used to construct the extinguisher valve and cylinder expand and contract as a function of temperature. The engagement surfaces between the extinguisher parts therefore exert more pressure against one another at certain temperatures and less at others. When the vehicle is exposed to a temperature that results in less engagement surface pressure, greater levels of leakage can result. For similar reasons, vehicles that experience rapid temperature changes can experience additional seal leakage due to environmental challenges to sealing effectiveness.

One solution to these problems is to add inspections and periodic maintenance for AFES extinguishers, such as measuring pressure and re-charging or replacing the extinguisher within the vehicle life cycle. Added inspections and maintenance events assure extinguisher reliability, but these actions reduce vehicle operational availability and add cost and complexity to vehicle maintenance. Another solution is permanently sealing the extinguisher valve into the extinguisher cylinder, such as by welding the valve permanently into the cylinder. This design method adds multiple operations to extinguisher manufacturing, thereby making cost-effective high volume extinguisher manufacture more difficult. Additionally, this design method requires the use of weldable materials that are much more expensive than the materials used in standard pressure cylinders. Welding the extinguisher valve to the cylinder also makes it more difficult to refill and/or reuse the extinguisher following discharge.

Consequently, while conventional extinguisher threaded interfaces have generally been considered satisfactory for their intended purpose, there exists a present need for an AFES extinguisher with an improved cylinder-to-valve interface that reduces leakage. There also exists a need for such methods and devices that allow a high rate discharge valve to be quickly mated to the pressure vessel. The present invention provides a solution for these problems.

### SUMMARY OF THE INVENTION

The subject invention is directed to a new and useful low leak rate threaded interface for use in fire extinguisher cylinder-valve assemblies for example. The threaded interface includes a male threaded valve body having a threaded section with external threads and a seal section with a pair of o-ring seals seated circumferentially around the male threaded body. The interface also includes a female threaded pressure vessel having a threaded section with internal threads engaged with the external threads of the male threaded body, and a seal section engaged to the o-ring seals of male threaded body.

In certain embodiments, the female threaded body is a modified AS5202 port modified such that Dimension E is increased. The female threaded body can be a modified AS5202-20 port having a Dimension E of about 0.325 inches (0.8255 centimeters). The male threaded body can be a valve boss and the female threaded body can be cylinder port of a pressure vessel.

In certain embodiments, the male threaded body includes a first circumferential groove seating one of the o-ring seals and a second circumferential groove seating the other o-ring seal, the first and second circumferential grooves being separated by a circumferential wall between the seals. The first circumferential groove can have a diameter in the range of about 1.521 inches to about 1.525 inches (3.863 centimeters to 3.873 centimeters) and an axial width in the range of about 0.124 to about 0.128 inches (0.315 centimeters to 0.325 centimeters). In the embodiment, the circumferential wall may have an outer diameter in the range of about 1.641 inches to about 1.646 inches (4.168 centimeters to 4.181 centimeters), and an axial thickness of about 0.075 inches (0.190 centimeters). The circumferential wall can include an annular surface facing axially towards a mating face of the female threaded body, the annular surface and the mating face being separated by about 0.203 inches (0.515 centimeters). The second circumferential groove can have a diameter in the range of about 1.493 inches to about 1.497 inches (3.792 centimeters to 3.802 centimeters) and an axial width in the range of about 0.122 inches to about 0.126 inches (0.310 centimeters to 0.320 centimeters). The first circumferential groove can define an annular surface facing towards the circumferential wall and the second circumferential groove defines a groove surface facing towards the circumferential wall, the annular surface and the groove surface being separated by 0.329 inches (0.835 centimeters) or less.

It is also contemplated that both the o-ring seals can conform to AS568-128 specifications.

The invention also provides a pressure vessel with a vessel body having a port and a valve boss. The pressure vessel body is configured and adapted to receive a charge of Helium at 15 pounds per square inch (103 kilopascals), HFC-227ea, and Nitrogen at 900 pounds per square inch (6205 kilopascal) at 70° F. The vessel port is configured and arranged to for fluidly communicating the charge in to and out of the pressure vessel body. The valve boss is engaged to the pressure port at an interface configured and adapted to maintain a substantially hermetic seal separating the charge from an environment external to the pressure vessel such that the pressure vessel exhibits substantially no charge loss resultant from (i) 144 hours of exposure to a -70° F (-57° C) environment, and (ii) 2 hours of exposure to a 140° F (60° C) environment.

In certain embodiments the pressure vessel also exhibits substantially no charge loss resultant from 162 hours of successive 12 hour intervals of exposure to -65° F (-54° C) and 185° F (85° C) environments, 162 hours of successive 12 hour intervals of exposure to -70° F (-57° C) and 190° F (88° C) environments, (i) 144 hours of exposure to a -70° F (-57° C) environment and (ii) 45 hours of exposure to a 190° F (88° C) environment, (i) 166 hours of exposure to a -70° F (-57° C) environment and (ii) 48 hours of successive 4 hour intervals of exposure to -70° F (-57° C) and 190° F (88° C) environments, or 210 hours of exposure to a -75° F (-59° C) environment.

The invention further provides a pressure vessel body configured and adapted to receive a 900 PSI charge at 70° F. The pressure vessel body includes a pressure port for fluid communication of the charge into and out of the pressure vessel body. The pressure vessel meets the requirements of DOT-3AA per DOT 49CFR 178.37 which is incorporated herein by reference in its entirety. A valve boss is engaged to the pressure port at an interface configured and adapted to maintain a substantially hermetic seal separating the charge from an environment external to the pressure vessel. The pressure vessel exhibits substantially no charge loss resultant from (i) 144 hours of exposure to a -70° F (-57° C) environment, (ii) 45 hours of exposure to a 190° F (88° C) environment, (iii) 166 hours of exposure to a -70° F (-57° C) environment, (iv) 48 hours of successive 4 hour intervals of exposure to -70° F (-57° C) and 190° F (88° C) environments, and (v) 210 hours of exposure to a -75° F (-59° C) environment.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 is a perspective view of an exemplary embodiment a pressure vessel constructed in accordance with the present invention showing the valve threaded into the cylinder;
Fig. 2 is an exploded view of the pressure vessel of Fig. 1 showing the male threaded body separate from the female threaded body;
Fig. 3 is a side elevation of a portion of the male threaded body of Fig. 2 showing the two o-rings disposed about the male threaded body;
Fig. 4 is a cross-sectional side elevation view of the pressure vessel of Fig. 1 showing the male threaded body being assembled into the female threaded body;
Fig. 5 is a cross-sectional side elevation view of a portion of the female threaded body of Fig. 4;
Fig. 6 is cross-sectional side elevation view of the pressure vessel of Fig. 1 showing the modified Dimension E of the threaded interface in an assembled configuration; and
Fig. 7 is a table of the leak tests and results from a conventional threaded interface and embodiments of threaded interfaces constructed in accordance with the present invention.

### DETAILED DESCRIPTION OF THE PREFERRED EMBODIMENTS

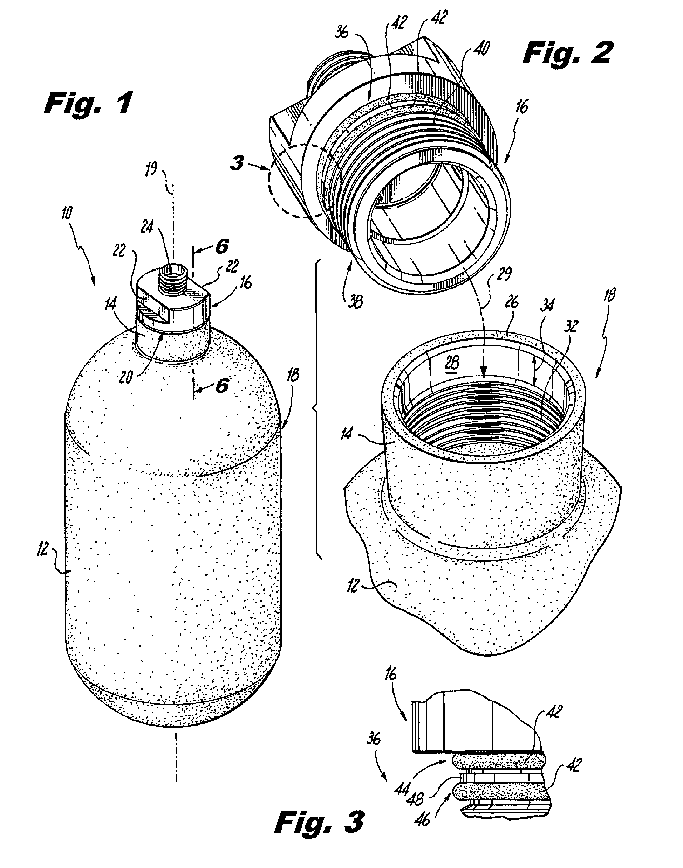

Reference will now be made to the drawings wherein like reference numerals identify similar structural features or aspects of the subject invention. For purposes of explanation and illustration, and not limitation, a partial view of an exemplary embodiment of the threaded interface in accordance with the invention is shown in Fig. 1 and is designated with reference character 10. Other embodiments of the threaded interface in accordance with the invention, or aspects thereof, are provided in Figs. 2-7, as will be described. The threaded interface of the invention can be used for pressure vessels, fire extinguishers, automatic fire extinguisher systems. Referring now to Fig. 1, pressure vessel 10 is shown in an assembled configuration. Pressure vessel 10 has a pressure vessel body 12 defining a pressure vessel neck 14. The neck 14 in turn defines a pressure port (shown in Fig. 2) within which a portion of a valve boss 16 is disposed. Valve boss 16 and pressure vessel body 12 are in intimate mechanical contact about at least a portion of a boss to a port interface 20, a portion of which is viewable in Fig. 1 and which circumferentially extends about the top of the pressure vessel neck 14 about a vessel axis 19. Valve boss 16 defines a plurality of tool engagement 22 and an aperture 24, the aperture being configured and arranges to receive a valve or similar hardware to selective place an interior (not shown) of the pressure vessel in fluid communication with the environment external to the pressure vessel. As will be appreciated, at least a portion of the interface is disposed within the neck of the pressure vessel and is configured and arranged to hermetically seal a pressurized charge within the pressure vessel from the environment external to the pressure vessel. In an exemplary embodiment, pressure vessel 10 is cylinder configured and arranged to store pressurized fire retardant material for an extended period of time, e.g. throughout the life cycle of a vehicle utilizing pressure vessel 10 during vehicle operation in extreme temperature environments.

Referring now to Fig. 2, male threaded body 16 and a female threaded body 18 are shown separated. In the illustrated embodiment, the male threaded body 16 is a valve boss and the female threaded body 18 is a pressure vessel cylinder port. The female-threaded body 18 is disposed within the pressure vessel neck 14, and may optionally further extend into the pressure vessel body 12. Female threaded body 18 includes a mating face 26 disposed in a plane substantially orthogonal with respect to the vessel axis 19 (shown in Fig. 1), a seal section 28, and a threaded section 32. Seal section 28 is axially disposed and radially offset from the vessel axis 19 and bounds mating face 26. Seal section 28 includes a smooth, hard surface configured and arranged to compress seals inwardly with respect to the surface in the direction of vessel axis 19 as will be described below. Threaded section 32 is axially disposed and radially offset from vessel axis 19, bounds seal section 28, and includes a plurality of internal threads along vessel axis 19. The vessel interior in turn bounds the lower portion of threaded section 32. Those skilled in the art will readily appreciate that the axial order of the seal section and threaded section may be reversed and remain within the scope of this disclosure.

Seal section 28 includes an axial dimension 34 and defines a circumferentially extending seal engagement surface that is radially offset with respect to the vessel axis 19. The seal engagement surface extends axially and substantially parallel to the vessel axis 19 along a portion of the vessel neck, and is configured and arranged to sealably engage at least one seal element. The engagement surface of seal section 28 is configured to hermetically seal the vessel interior by compressably engaging a pair of o-ring seals, thereby preventing the migration of pressurized contents across the engagement surface to the environment external to the female-threaded body.

Internal threads of female threaded body threaded section 32 are configured and arranged to maintain a pressure differential between the pressure vessel interior and the environment external to the vessel. Seal section 28 and threaded section 32 cooperate with corresponding sections of male threaded body 16 (described below) to substantially hermetically seal the cylinder interior from the environment external the female-threaded body at elevated pressures, with substantially no leakage or with a very low leak rate during exposure to extreme high and extreme low temperatures. They also maintain the vessel charge pressure with substantially no leakage or with a very low leak rate during exposure to extreme temperature changes, or change cycles. In an exemplary embodiment, the charge pressure is at least 900 PSI.

In an exemplary embodiment, female-threaded body 18 includes a -20 port conforming to Revision A of Aerospace Standard AS5202 specifications, the contents of which are incorporated herein in their entirety by reference. In an exemplary embodiment, dimension 34 corresponds to Dimension E of AS5202 modified so as to be increased. For example, female threaded body 18 can be an AS5202-20 port where Dimension E is about 0.325 inches (0.825 centimeters). As would be appreciated by one of skill in the art, the threaded interface described herein can be applied to smaller or larger ports than the -20 sized example described herein.

With continued reference to Fig. 2, the male threaded body 16 has a seal section 36 and a threaded section 38, and in the illustrated embodiment is a valve boss. Seal section 36 has two seal elements 42, namely o-ring seals 42. Each o-ring seal 42 is axially seated and circumferentially disposed about the male threaded body 16 with respect to vessel axis 19. O-rings 42 are further configured and arranged to sealably engage corresponding seal section 28 of the above-described female threaded body 18 by being compressed between seal section 36 of male threaded body 16 and the seal section 28 of female threaded body 18. O-ring 42 includes elastic material configured and arranged to axially deform when male threaded body 16 is inserted into female body 18 as indicated by arrow 29 in Fig. 2.

Each of o-rings 42 are identical, e.g. for ease of manufacture, but can optionally be different from one another. O-rings 42 can conform to Revision A of Aerospace Standard AS568 specifications the contents of which are incorporated herein by reference. In an exemplary embodiment, o-ring seals 42 are AS568-128 o-rings. The o-rings can be fabricated using an elastomeric composition, such as Parker E0803-70 Compound in the 128 size for example. As would be appreciated by one of skill in the art, the composition of one of both o-rings 42 can be varied based upon the fluid(s) stored within the cylinder assembly, and that any suitable type of seals can be used without departing from the scope of this disclosure.

With reference now to Fig. 3, male threaded body 16 is further described. Seal section 36 has a first circumferential groove 44 and a second circumferential groove 46 that provide seats for o-rings 42, and a circumferential wall 48 separates circumferential grooves 44 and 46. Grooves 44 and 46 fix o-rings 42 in respective axial positions with respect to seal section 36 when male threaded body 16 is installed within female threaded body 18. Circumferential wall 48 and circumferential grooves ( 44 and 46) are arranged coaxially with respect to vessel axis 19, second circumferential groove 46 bounding threaded section 38, and first circumferential groove 46 bounding circumferential wall 48. Seal section 36 and threaded section 38 (see Fig. 2) of male threaded body 16 correspond to the above-described seal section 28 and threaded section 32 of female threaded body 18 such that, in an assembled configuration, the seal sections (28 and 36) sealingly engage o-rings 42.

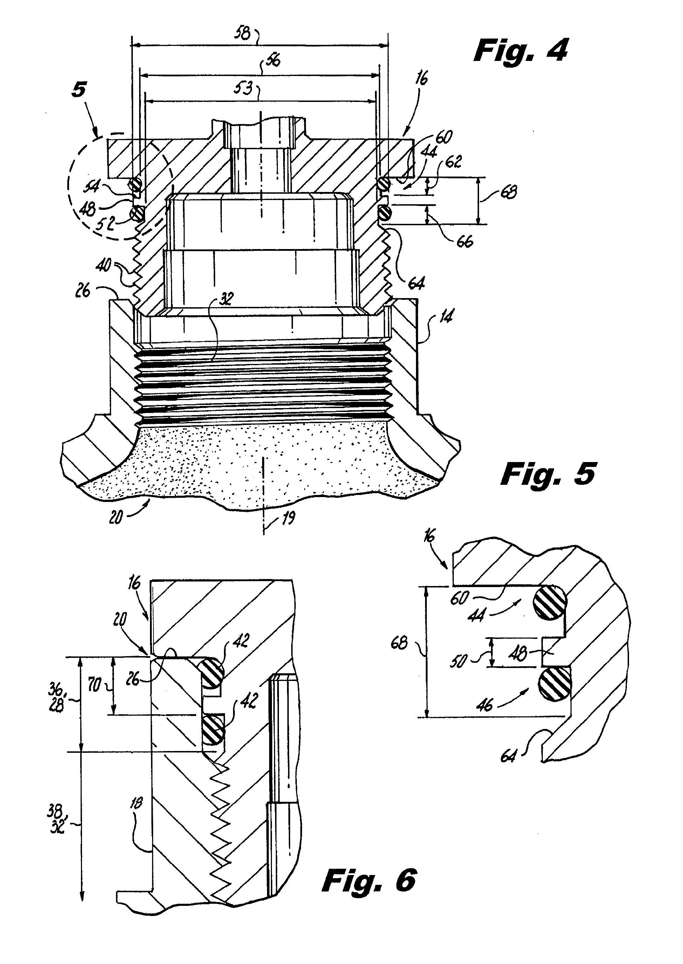

Referring now to Fig. 4, threaded interface 20 is shown in a disassembled configuration. Circumferential wall 48 has an axial thickness 50 (shown in Fig. 5), a first annular surface 52, a second annular surface 54, and an outer axial height defining a wall diameter 58. The wall axial thickness 50 can be about 0.075 inches (0.190 centimeters) and, for example, the wall outer diameter 58 can be in the range of about 1.641 inches to about 1.646 inches (4.168 centimeters to 4.181 centimeters).

As also shown in Fig. 4, first circumferential groove 44 has a circumferential diameter 56 and an annular surface 60 that is substantially orthogonal with respect to the vessel axis 19. Annular surface 60 faces toward circumferential wall 48, and in the illustrated embodiment, axially fixes the position of o-ring 42 disposed within first circumferential groove 44. The first circumferential groove diameter 56 can be in the range of about 1.521 inches to about 1.525 inches (3.863 centimeters to 3.873 centimeters) and groove axial width 62 can be in the range of about 0.124 inches to about 0.128 inches (0.314 centimeters to 0.325 centimeters).

As further shown in Fig. 4, second circumferential groove 46, for example, has a circumferential diameter 53, a groove surface 64, and an axial width 66. The groove surface 64 faces generally towards the circumferential wall 48 and the axial width extends substantially along and radially offset with respect to the vessel axis 19. Second circumferential groove diameter 53 can be in the range of about 1.493 inches to about 1.497 inches (3.792 centimeters to 3.802 centimeters), and second circumferential groove axial width 66 can be in the range of about 0.122 inches to about 0.126 inches (0.310 centimeters to 0.320 centimeters), for example.

With reference now to Fig. 5, a cross-sectional portion of male threaded body 16 is shown. An axial distance 68 separates annular surface 60 of the first circumferential groove 44 from the groove surface 64 of the second circumferential groove 46. As an example, axial distance 68 can be about 0.329 inches (0.835 centimeters).

Referring now to Fig. 6, a cross-sectional view of an embodiment of threaded interface 20 is shown in an assembled configuration. Male threaded body 16 is disposed within corresponding female threaded body 18 such that respective seal sections (28 and 36) and threaded sections (38 and 32) axially oppose one another. Annular surface 52 of male threaded body 16 and mating surface 26 of female threaded body 18 have an axial separation distance 70. Axial separation distance can be about 0.203 inches (0.515 centimeters), for example. In the assembled configuration, corresponding seal sections (36 and 28) of the male threaded and female threaded bodies (16 and 18) so as to compress o-rings 42 between the sealing surfaces and the respective circumferential grooves (44 and 46), thereby establishing at least two barriers across a leak path potentially defined between the opposing surfaces. Corresponding internal threads 32 and external threads 38 of the male and female threaded bodies (16 and 18) similarly sealingly engage one another as well as resist pressure applied by the sealed vessel contents on interface 20.

The displacement of the male-threaded member along axis 19 into the female-threaded member during installation displaces the second o-ring within the second circumferential groove, causing it to seat opposing the circumferential wall 48. This in turn pressurizes a pocket defined between o-rings 42 in the interface sealed configuration. Pressurization of the pocket urges o-rings 42 against their respective surfaces, improving the resistance of the interface to charge exfiltration across the interface, particularly when the male and female threaded bodies (16 and 18) are exposed to extreme temperature environments and associated geometry changes owing to disparate coefficients of expansion. Moreover, upon charging the pressure vessel with a pressurized gas mixture, the o-rings are pressed into the illustrated arrangement. It is believed that a double seal provided by o-rings, respective sealing surfaces, annular surfaces, and annular grooves contribute to the unexpectedly large improvement in leakage performance.

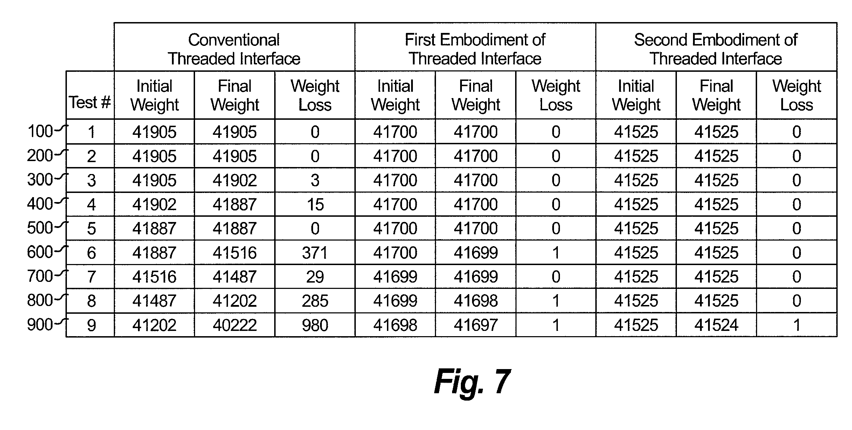

Fig. 7 is table of the leak test results from three pressure vessels (e.g. test cylinders) including two exemplary embodiments of the above-described threaded interface 20 and a conventional threaded interface (not shown) per AS5202-20 (female) and AS33656 (male). All three test units utilized the same sized pressure vessel and were charged with the same 15psi Helium, 6.0 pounds of HFC227ea, and 900 psi of Nitrogen at 70° F. The o-rings utilized were of the same compound.

Pressure vessels 1 and 2 were fabricated including embodiments of the above-described threaded interface. Pressure vessel 3 was fabricated including a conventional threaded interface. Test pressure vessels 1-3 were then subjected to a sequence of nine leak tests, each test comprising (i) obtaining an initial aggregate pressure vessel and pressure vessel charge weight for pressure vessels 1-3 (e.g. initial total weight); (ii) subjecting pressure vessels 1-3 to at least one of (a) a extremely hot or an extremely cold temperature, e.g. a temperature range of -60° F to -160° F, for a prolonged period of time, and (b) temperature shock by successively exposure to extremely hot and cold temperatures for a period of shorter time intervals; and (iii) obtaining a post-test aggregate pressure vessel and pressure vessel charge weight for pressure vessels 1-3 (e.g. final total weight). For illustrative purposes the all weight measurements shown in Fig. 7 are normalized to the sensitivity of the scale used to acquire the measurements, referred to herein as a mass unit.

Since the structures of the test pressure vessels are unaffected by testing, the difference between the final and initial test weights is due to leakage of pressurized agent and gas from within pressure vessels. Since the charge loss is solely attributable to leakage across the threaded interface, and more particularly the threaded interface o-ring(s), the weight loss difference resulting from a given test is indicative of a drop in pressure vessel pressure due to exposure to the environmental conditions imposed during a given test. As would be appreciated by one of skill in the art, the environmental conditions imposed by a given test and associated charge loss can be extrapolated into expected AFES extinguisher reliability in a given vehicular application given an understanding of the expected environmental conditions in which the vehicle is to be employed during its life cycle.

Test pressure vessel 3, including a conventional threaded interface, was fabricated by (i) providing a standard size pressure vessel with a port having a conventional female threaded body conforming to AS5202-20 specifications; (ii) providing a test fitting having a conventional male threaded body conforming to AS33656 specification; (iii) lubricating at least one o-ring circumferentially disposed about a body of the male threaded body of the test fitting; (iv) inserting the male threaded body into the female threaded body, thereby sealably engaging the test fitting into the pressure vessel port; (v) torqueing the test fitting to a predetermined value; (vi) configuring the test pressure vessel for pressurization with a test charge by inserting at least one conventional fill fitting and gasket into the test fitting; (vii) charging the test pressure vessel by (a) attaching a charge adapter to the fill fitting, and (b) placing an interior of the pressure vessel in fluid communication with at least one pressurized gas reservoir; (viii) hermetically sealing the test pressure vessel from the environment external to the test pressure vessel such that the only leak path between the test pressure vessel interior and external environment is across the threaded interface, and more particularly across the at least one o-ring, by (a) torqueing the test fitting to a predetermined value, and (b) welding the test fitting in place; and (ix) leak testing the sealed and charged test fitting. Test pressure vessels 1 and 2 were fabricated and charged using same method as that used for test pressure vessel 3 with the additional operation of modifying at least one of the male threaded body and female body conforming to AS33656 and AS5202 specifications as described above with respect to Figs. 1-6.

During the fabrication of test pressure vessels 1-3 the predetermined torque value was 75 ft-lbs and the charging the test pressure vessel further comprised placing the test pressure vessel in fluid communication with (1) a reservoir of Helium having a pressure of about 15 PSI, a reservoir of HFC-227ea, and a reservoir of Nitrogen having a pressure of about 900 PSI. As would be appreciated by one of skill in the art, other torque values and charge contents may be employed for test pressure vessel fabrication and be within the scope of the above-described method.

Test 1 (100) exposed the test pressure vessels to a -65° F (-54° C) environment for 91 hours. None of test pressure vessels 1-3 experienced a measurable weight loss due to the testing, and under the test conditions the exemplary threaded interfaces performed as well as the conventional threaded interface.

Test 2 (200) exposed the test pressure vessels to a -70° F (-57° C) environment for 144 hours. None of test pressure vessels 1-3 experienced a measurable weight loss due to the testing, and under the test conditions the exemplary threaded interfaces performed as well as the conventional threaded interface.

Test 3 (300) exposed the test pressure vessels to a -70° F (-57° C) environment for 144 hours followed by an exposure to a 140° F (60° C) environment for 2 hours. Test pressure vessel 1 and test pressure vessel 2 exhibited no measurable charge weight loss due to the testing. In contrast, test pressure vessel 3 experienced a weight loss of 3 mass units as a result of the testing. The exemplary threaded interfaces therefore performed better than the conventional threaded interface under the test conditions.

Test 4 (400) was a temperature shock test. Each of test pressure vessels 1-3 was sequentially exposed to a -65° F (-54° C) and a 185° F (85° C) environment for 8 hour intervals for a 162 hour test period. Test pressure vessel 1 and test pressure vessel 2 exhibited no measurable weight loss due to the testing. In contrast, test pressure vessel 3 experienced a weight loss of about 15 mass units as a result of the testing. The exemplary threaded interfaces therefore performed better than the conventional threaded interface under the test conditions.

Test 5 (500) was a temperature soak test during which pressure vessels 1-3 were exposed to a 185° F (85° C) environment for a 165 hour period. None of test pressure vessels 1-3 experienced a measurable weight loss, the exemplary threaded interfaces performed as well as the conventional threaded interface under the test conditions.

Test 6 (600) was a temperature shock test. For a 162 hour test period, test pressure vessels 1-3 sequentially were exposed to -70° F (-57° C) and 190° F (88° C) environments for 8 hour intervals. Test pressure vessels 1-2 experienced a weight loss of about 1 mass unit due to the testing. In contrast, test pressure vessel 3 experienced a weight loss of about 371 mass units as a result of the testing. The exemplary threaded interfaces therefore performed better than the conventional threaded interface under the test conditions.

Test 7 (700) included a temperature soak at both elevated and depressed temperatures. Pressure vessels 1-3 were first exposed to a -70° F (-57° C) environment for a 144 hour period. Pressure vessels 1-3 pressure vessels were then exposed to a 190° F (88° C) environment for a 45 hour period. Pressure vessels 1-2 experienced no measurable weight loss attributable to the test conditions. In contrast, pressure vessel 3 experienced a weight loss of about 29 mass units. The exemplary threaded interfaces therefore performed better than the conventional threaded interface under the test conditions.

Test 8 (800) included a temperature soak followed by temperature shock. Pressure vessels 1-3 were first exposed to a -70° F (-57° C) for 166 hours. Pressure vessels 1-3 were then sequentially exposed to -70° F (-57° C) and 190° F (88° C) environments for 4 hour intervals for a period of 48 hours. Pressure vessels 1-2 experienced a weight loss of about 1 mass unit attributable to the test conditions. In contrast, pressure vessel 3 experienced a weight loss of about 285 mass units as a result of the testing. The exemplary threaded interfaces therefore performed better than the conventional threaded interface under the test conditions.

Test 9 (900) was a low temperature soak test during which pressure vessels 1-3 were exposed to a -75° F (-59° C) environment for a 210 hour period. Pressure vessels 1-2 experienced a weight loss of about 1 mass unit attributable to the test conditions. In contrast, pressure vessel 3 experienced a weight loss of about 980 mass units as a result of the testing. The exemplary threaded interfaces therefore performed significantly better than the conventional threaded interface under the test conditions.

As would be appreciated by one of skill in the art, different time periods, time intervals and temperatures may be used to characterize the performance of the exemplary threaded interface and conventional interface. Notably, the relatively negligible weight loss by pressure vessels 1-2 under test conditions where pressure vessel 3 exhibited much larger weight loss constitutes unexpectedly good results, and indicates that embodiments of the above-described threaded interface are desirable in vehicular applications, for example, where (i) the vehicle is expected to have a long life cycle, (ii) the vehicle is expected to be subjected to extreme temperature ranges, or (iii) the vehicle is expected to be subjected to extreme temperature ranges. Moreover, the extreme temperatures and extreme temperature ranges of tests 1-9 are indicative of better threaded interface performance to exposure to lower (in absolute terms) extreme temperatures and temperature ranges over longer periods of time in comparison with conventional threaded interfaces.

The methods and systems of the present invention, as described above and shown in the drawings, provide for threaded interfaces for pressure vessels with superior properties including lower leak rates relative to the conventional designs - and significantly lower leak rates relative to conventional designs when exposed to extreme temperature environments and/or extreme temperature ranges. AFES incorporating embodiments of the threaded interfaces described herein provide long service life, tolerance to extreme environments, and safety dependency. While the apparatus and methods of the subject invention have been shown and described with reference to preferred embodiments, those skilled in the art will readily appreciate that changes and/or modifications may be made thereto without departing from the scope of the subject invention.

The following clauses set out features of the invention which may not presently be claimed in this application but which may form the basis for future amendment or a divisional application.
1. A pressure vessel comprising:
   a pressure vessel body configured and adapted to receive a charge of Helium at 15 PSI (103 kilopascals), HFC-227ea, and Nitrogen at 900 PSI (6205 kilopascals) at 70° F, wherein the pressure vessel includes a pressure port for fluid communication of the charge into and out of the pressure vessel body; and
   a valve boss engaged to the pressure port at an interface configured and adapted to maintain a substantially hermetic seal separating the charge from an environment external to the pressure vessel,
   wherein the pressure vessel exhibits substantially no charge loss resultant from (i) 144 hours of exposure to a -70° F (-57° C) environment, and (ii) 2 hours of exposure to a 140° F (60° C) environment.
2. A pressure vessel as recited in clause 1, wherein the pressure vessel exhibits substantially no charge loss resultant from 162 hours of successive 4 hour intervals of exposure to -70° F (-57° C) and 190° F (88° C) environments.
3. A pressure vessel as recited in clause 1, wherein the pressure vessel exhibits substantially no charge loss resultant from (i) 144 hours of exposure to a -70° F (-57° C) environment, and (ii) 45 hours of exposure to a 190° F (88° C) environment.
4. A pressure vessel as recited in clause 1, wherein the pressure vessel exhibits substantially no charge loss resultant from (i) 166 hours of exposure to a -70° F (-57° C) environment, and (ii) 48 hours of successive 4 hour intervals of exposure to -70° F (-57° C) and 190° F (88° C) environments.
5. A pressure vessel as recited in clause 1, wherein the pressure vessel exhibits substantially no charge loss resultant from 210 hours of exposure to a -75° F (-59° C) environment.
6. A pressure vessel comprising:
   a pressure vessel body configured and adapted to receive a 900 PSI charge at 70° F, wherein the pressure vessel includes a pressure port for fluid communication of the charge into and out of the pressure vessel body; and
   a valve boss engaged to the pressure port at an interface configured and adapted to maintain a substantially hermetic seal separating the charge from an environment external to the pressure vessel,
   wherein the pressure vessel exhibits substantially no charge loss resultant from (i) 144 hours of exposure to a -70° F (-57° C) environment, and (ii) 45 hours of exposure to a 190° F (88° C) environment,
   wherein the pressure vessel exhibits substantially no charge loss resultant from (i) 166 hours of exposure to a -70° F (-57° C) environment, and (ii) 48 hours of successive 4 hour intervals of exposure to -70° F (-57° C) and 190° F (88° C) environments,
   wherein the pressure vessel exhibits substantially no charge loss resultant from 210 hours of exposure to a -75° F (-59° C) environment.

## Claims

1. A threaded interface comprising:
a male threaded body (16) including a threaded section (38) having external threads and a seal section with a pair of o-ring seals (42) seated circumferentially around the male threaded body; and
a female threaded body (18) including a threaded section (32) having internal threads engaged with the external threads of the male threaded body, and a seal section (28) sealingly engaged to the o-ring seals.

2. A threaded interface as recited in claim 1, wherein the female threaded body is a modified AS5202-20 port modified to have Dimension E increased.

3. A threaded interface as recited in claim 1, wherein the female threaded body is a modified AS5202 port where Dimension E is about 0.325 inches (0.825 centimeters).

4. A threaded interface as recited in claim 1, wherein the male threaded body includes a first circumferential groove seating (44) one of the o-ring seals, and a second circumferential groove (46) seating the other of the o-ring seals, wherein the first and second circumferential grooves are separated by a circumferential wall (48) between the o-ring seals.

5. A threaded interface as recited in claim 4, wherein the first circumferential groove has a diameter in the range of about 1.521 inches to about 1.525 inches (3.863 centimeters to 3.873 centimeters).

6. A threaded interface as recited in claim 4 or 5, wherein the first circumferential groove has an axial width in the range of about 0.124 inches to about 0.128 inches (0.315 centimeters to 0.325 centimeters).

7. A threaded interface as recited in claim 4, 5 or 6, wherein the circumferential wall has an outer diameter in the range of about 1.641 inches to about 1.646 inches (4.168 centimeters to 4.181 centimeters); and/or
wherein the circumferential wall has an axial thickness of about 0.075 inches (0.190 centimeters); and/or
wherein the circumferential wall includes an annular surface facing axially towards a mating face of the female threaded body, wherein the annular surface and a mating face of the female threaded body are separated by about 0.203 inches (0.516 centimeters).

8. A threaded interface as recited in any of claims 4 to 7, wherein the second circumferential groove has a diameter in the range of about 1.493 inches to about 1.497 inches (3.792 centimeters to 3.802 centimeters).

9. A threaded interface as recited in any of claims 4 to 8, wherein the second circumferential groove has an axial width in the range of about 0.122 inches to about 0.126 inches (0.310 centimeters to 0.320 centimeters).

10. A threaded interface as recited in any of claims 4 to 9, wherein the first circumferential groove defines an annular surface facing towards the circumferential wall, wherein the second circumferential groove defines a groove surface facing towards the circumferential wall, wherein the annular surface and the groove surface are separated by about 0.329 inches (0.835 centimeters) or less.

11. A threaded interface as recited in any of claims 4 to 10, wherein both o-ring seals conform to AS568-128 specifications.

12. A threaded interface as recited in any preceding claim, wherein the male threaded body is a valve boss and wherein the female threaded body is a pressure vessel port of a pressure vessel (10).

13. A threaded interface as claimed in claim 12, wherein the pressure vessel comprises:
a pressure vessel body configured and adapted to receive a charge of Helium at 15 PSI (103 kilopascals), HFC-227ea, and Nitrogen at 900 PSI (6205 kilopascals) at 70° F (21.1°C), wherein the pressure vessel includes a pressure port (24) for fluid communication of the charge into and out of the pressure vessel body; and
a valve boss (16) engaged to the pressure port at an interface configured and adapted to maintain a substantially hermetic seal separating the charge from an environment external to the pressure vessel,
wherein the pressure vessel exhibits substantially no charge loss resultant from (i) 144 hours of exposure to a -70° F (-57° C) environment, and (ii) 2 hours of exposure to a 140° F (60° C) environment.

14. A threaded interface as recited in claim 12, wherein the pressure vessel exhibits substantially no charge loss resultant from 162 hours of successive 4 hour intervals of exposure to -70° F (-57° C) and 190° F (88° C) environments, and/or
wherein the pressure vessel exhibits substantially no charge loss resultant from (i) 144 hours of exposure to a -70° F (-57° C) environment, and (ii) 45 hours of exposure to a 190° F (88° C) environment; and/or
wherein the pressure vessel exhibits substantially no charge loss resultant from (i) 166 hours of exposure to a -70° F (-57° C) environment, and (ii) 48 hours of successive 4 hour intervals of exposure to -70° F (-57° C) and 190° F (88° C) environments; and/or
wherein the pressure vessel exhibits substantially no charge loss resultant from 210 hours of exposure to a -75° F (-59° C) environment.

15. A threaded interface according to claim 12, wherein the pressure vessel comprises:
a pressure vessel body configured and adapted to receive a 900 PSI charge at 70° F,
wherein the pressure vessel includes a pressure port for fluid communication of the charge into and out of the pressure vessel body; and
a valve boss engaged to the pressure port at an interface configured and adapted to maintain a substantially hermetic seal separating the charge from an environment external to the pressure vessel,
wherein the pressure vessel exhibits substantially no charge loss resultant from (i) 144 hours of exposure to a -70° F (-57° C) environment, and (ii) 45 hours of exposure to a 190° F (88° C) environment,
wherein the pressure vessel exhibits substantially no charge loss resultant from (i) 166 hours of exposure to a -70° F (-57° C) environment, and (ii) 48 hours of successive 4 hour intervals of exposure to -70° F (-57° C) and 190° F (88° C) environments,
wherein the pressure vessel exhibits substantially no charge loss resultant from 210 hours of exposure to a -75° F (-59° C) environment.
